# EUROPÄISCHE PATENTANMELDUNG

(11) **EP 1 281 909 A2**
(43) Veröffentlichungstag der Anmeldung: **05.02.2003**
(21) Anmeldenummer: 02014578.5
(22) Anmeldetag: 02.07.2002
(51) Int. Cl.: F16L 37/084

(54) **Rastverbindungsstruktur und hiermit versehene Leitungseinrichtung**

(30) Priorität: 02.08.2001 DE 10137998
(71) Anmelder: Bayerische Motoren Werke Aktiengesellschaft, 80809 München (DE)
(72) Erfinder: Sadlauer, Alfred, 4432 Ernsthofen (AT)

(57) **Zusammenfassung**

Die Erfindung betrifft eine Rastverbindungsstruktur sowie eine hiermit versehene Leitungseinrichtung. Die erfindungsgemäße Rastverbindungsstruktur umfasst einen zur Ankoppelung an ein Gegenstück vorgesehenen Koppelungsabschnitt, der eine Umfangswandung und wenigstens einen in der Umfangswandung ausgebildeten Rastvorsprung aufweist. Der Rastvorsprung ist im Zusammenspiel mit dem Gegenstück in eine Verriegelungsposition bringbar und fixiert dabei den Koppelungsabschnitt und das Gegenstück in einer Fügestellung. Der Rastvorsprung weist eine mit dem Gegenstück in Verriegelungsstellung bringbare Eingriffszone auf, wobei in einem an die Eingriffszone angrenzenden Bereich in der Umfangswandung wenigstens eine Falte ausgebildet ist.

## Beschreibung

Die Erfindung betrifft eine Rastverbindungsstruktur sowie eine hiermit versehene Leitungseinrichtung beispielsweise zur Zuleitung von Luft zu einer Brennkraftmaschine oder einem Fahrgastraum.

Insbesondere im Automobilbau ist es üblich die zum Betrieb einer Brennkraftmaschine erforderliche Ansaugluft unter Zwischenschaltung eines Luftfilterkastens aus dem vorderen Bereich eines Motorraumes abzugreifen. In Abhängigkeit von der Position des Luftfilterkastens im Motorraum ist es hierbei im Regelfall notwendig, stromaufwärts und/oder stromabwärts des Luftfilterkastens eine Leitungseinrichtung vorzusehen, über welche die Ansaugluft einer Gemischbereitungseinrichtung oder dem Ansaugtrakt der Brennkraftmaschine zugeleitet werden kann. Diese Leitungseinrichtungen sind üblicherweise, zumindest abschnittsweise flexibel ausgebildet, um eine weitgehende mechanische Entkoppelung der Anfangs- und Endabschnitte der Leitungseinrichtung zu erreichen und dadurch Relativbewegungen der Brennkraftmaschine gegenüber der Fahrzeugkarosserie zuzulassen.

Die genannten Leitungseinrichtungen können mit einem Luftfilterkasten oder mit einem brennkraftmaschinenseitig vorgesehenen Einlassabschnitt gekoppelt werden, indem diese auf entsprechend vorgesehene Anschluss-Stutzen aufgesteckt bzw. in diese eingesteckt und durch Fixiermittel wie beispielsweise Schlauchbinder fixiert werden.

Der Erfindung liegt die Aufgabe zugrunde, eine Rastverbindungsstruktur sowie eine hiermit versehene Leitungseinrichtung zu schaffen, die unter fertigungstechnischen Gesichtspunkten günstig herstellbar ist und welche eine einfache An- und Abkoppelung der Leitungseinrichtung von einer hierzu passenden Gegenstruktur ermöglicht.

Diese Aufgabe wird erfindungsgemäß gelöst durch eine Rastverbindungsstruktur mit einem zur Ankoppelung an ein Gegenstück vorgesehenen Koppelungsabschnitt, der eine Umfangswandung und einen mit dieser integral ausgebildeten Rastvorsprung aufweist, der in eine Verriegelungsposition bringbar ist und den Koppelungsabschnitt im Zusammenspiel mit dem Gegenstück in einer Fügestellung fixiert, wobei der Rastvorsprung eine in eine Verriegelungsstellung bringbare Eingriffszone aufweist und in einem an die Eingriffszone angrenzenden Bereich in der Umfangswandung wenigstens eine Falte ausgebildet ist.

Dadurch wird es auf vorteilhafte Weise möglich, eine Rastverbindungsstruktur zu schaffen,die bei Erreichen einer vorgegebenen Fügestellung selbsttätig in einen Verriegelungszustand gelangt, wobei dieser Verriegelungszustand manuell, gegebenenfalls ohne Werkzeugeinsatz aufhebbar ist und der Koppelungsabschnitt in dieser Lösestellung wieder von dem Gegenstück abnehmbar ist.

Eine im Hinblick auf eine besonders zuverlässige und dennoch leicht lösbare Verrastung vorteilhafte Ausführungsform der Erfindung ist dadurch gegeben, dass die Eingriffszone sich von einem Wurzelabschnitt ausgehend zungenartig aus der Umfangswandung erhebt. Dieser Wurzelabschnitt liegt vorzugsweise auf der in Fügerichtung weisenden Seite des Rastvorsprunges. Dadurch wird es möglich, beim Zusammenbau die zum Absenken der Eingriffszone erforderliche Kraftkomponente auf die als KeilFläche wirkende Aussenseite des Rastvorsprunges aufzubringen. Das Maß, um das sich der Rastvorsprung über die Aussenfläche der Umfangswandung erhebt, entspricht in vorteilhafter Weise wenigstens der Wanddicke der Umfangswandung bzw. der Wanddicke des Gegenstückes.

In vorteilhafter Weise weist die Falte einen u-förmigen Verlauf auf und umsäumt dabei den Rastvorsprung zumindest im Bereich der Eingriffszone.

Eine insbesondere im Hinblick auf die Aufbringung besonders hoher Haltekräfte vorteilhafte Ausführungsform der Rastverbindungsstruktur ist dadurch gegeben, dass der Koppelungsabschnitt mehrere Rastvorsprünge aufweist. Diese Rastvorsprünge sind vorzugsweise derart angeordnet, dass diese durch einhändiges er- bzw. umgreifen der Rastverbindungsstruktur mittels über die Fingerspitzen eingeleiteter Druckkräfte in eine Lösestellung bringbar sind. Es ist auch möglich, mehrere derartige Rastvorsprünge in unmittelbarer Nachbarschaft zueinander anzuordnen und durch eine Faltenstruktur miteinander elastisch zu koppeln.

Die den jeweiligen Rastvorsprung umsäumende Falte ist vorzugsweise derart ausgebildet, dass diese eine erste Faltenwandung aufweist,die sich an den Rastvorsprung anschließt und von diesem ausgehend zu einer tieferliegenden Falten-Furchenzone hin abfällt, wobei sich an die Furchenzone eine zweite Faltenwandung anschließt, die wiederum in die Umfangswandung zurückläuft. Dadurch wird es auf vorteilhafte Weise möglich, eine sich durch eine hohe Nachgiebigkeit auszeichnende Lagerung des Rastvorsprunges zu erreichen, ohne dass sich hierbei Undichtigkeiten im Bereich des Rastvorsprunges ergeben.

Die Wanddicken der ersten und/oder der zweiten Faltenwandung sind vorzugsweise dünner gewählt als die Wanddicken der angrenzenden Umfangswandung. Diese Reduktion der Wanddicken, vorzugsweise der beiden Faltenwandungen, kann insbesondere bei der Herstellung der erfindungsgemäßen Rastverbindungsstruktur als Blas-Formteil durch den im Bereich der Falten auftretenden höheren Umformgrad erreicht werden.

Gemäß einer besonders bevorzugten Ausführungsform der Erfindung fällt eine in der Furchenzone gebildete Falteninnenkante um eine Tiefziehstrecke unter eine Innenfläche der Umfangswandung zurück, die größer ist als die Wanddicke der ersten oder zweiten Faltenwand. Hierdurch ergibt sich eine besonders günstige Gelenkcharakteristik der durch die Faltenwände im Zusammenspiel mit dem Rastvorsprung und der Umfangswandung gebildeten Struktur.

Vorzugsweise ist die Falte derart ausgebildet, dass die erste und die zweite Faltenwand einen Winkel im Bereich von 15 bis 70° einschließen.

Der Rastvorsprung weist vorzugsweise eine, in Auszugsrichtung weisende Sperrfläche auf, wobei ein Neigungswinkel der Sperrfläche gegenüber einer Auszugs-Bahngeraden vorzugsweise derart geneigt ist, dass bei Überschreiten einer vorgegebenen Zugkraft der Rastvorsprung in eine Freigabestellung gedrängt wird, insbesondere abtaucht.

Das Rastverbindungsstrukturteil ist vorzugsweise als Blas-Formteil ausgebildet. Vorzugsweise wird hierbei ein aus einem thermoplastischen Basismaterial gefertigtes, hinreichend plastifiziertes Schlauchelement durch Aufbringen eines Innen-Umformdruckes gegen eine Formwand gedrängt, die komplementär zur Aussengestalt des zu fertigenden Bauteils ausgebildet ist. Nach Abkühlung des umgeformten Schlauchelementes ( vorzugsweise durch die Formwand) kann das die Formwand bidende Werkzeug geöffnet und das Blas-Formteil entnommen werden.

Hinsichtlich einer Leitungseinrichtung, insbesondere einer Luftleitungseinrichtung zur Verwendung in einem Kraftfahrzeug, wird die eingangs angegebene Aufgabe auch gelöst durch eine Leitungseinrichtung mit einem zur Ankoppelung an ein Gegenstück vorgesehenen Koppelungsabschnitt, wobei seitens des Gegenstückes eine Eingriffsausnehmung und seitens des Koppelungsabschnittes eine Umfangswandung und ein hiermit integral ausgebildeter Rastvorsprung vorgesehen ist, wobei der Rastvorsprung eine, in eine Verriegelungsstellung bringbare Eingriffszone aufweist und in einem an die Eingriffszone angrenzenden Bereich in der Umfangswandung wenigstens eine Falte ausgebildet ist.

Die erfindungsgemäße Leitungseinrichtung ist vorzugsweise aus einem thermoplastischen Kunststoffmaterial gefertigt und zumindest abschnittsweise mit Faltenbalgabschnitten versehen. Das mit dem Koppelungsabschnitt koppelbare Gegenstück ist vorzugsweise als Anschluss-Stutzen ausgebildet in welchen der Koppelungsabschnitt einsteckbar ist. Die zum Eingriff mit dem Rastvorsprung seitens des Gegenstückes vorgesehene Raststruktur ist vorzugsweise als Aufnahmeöffnung ausgebildet, in welche der Rastvorsprung federelastisch einschnappt.

Weitere Einzelheiten der Erfindung ergeben sich aus der nachfolgenden Beschreibung in Verbindung mit der Zeichnung. Es zeigt:
- **Fig. 1**: eine vereinfachte perspektivische Ansicht einer an einer Ansaugluftleitung ausgebildeten Rastverbindungsstruktur mit zungenartig ausgebildeten Rastvorsprüngen;
- **Fig. 2**: eine Schnittansicht durch die bei Rastverbindungsstruktur nach Fig. 1 vorgesehenen Rastvorsprünge entlang der Schnittlinie X - X;
- **Fig. 3**: eine Schnittansicht durch einen Rastvorsprung gemäß einer weiteren Ausführungsform der Erfindung;
- **Fig. 4**: eine perspektivische Detail-Darstellung einer Luftleitungseinrichtung sowie eines mit dieser koppelbaren Gegenstücks das bei diesem Ausführungsbeispiel Teil eines Luftfilterkastens bildet.

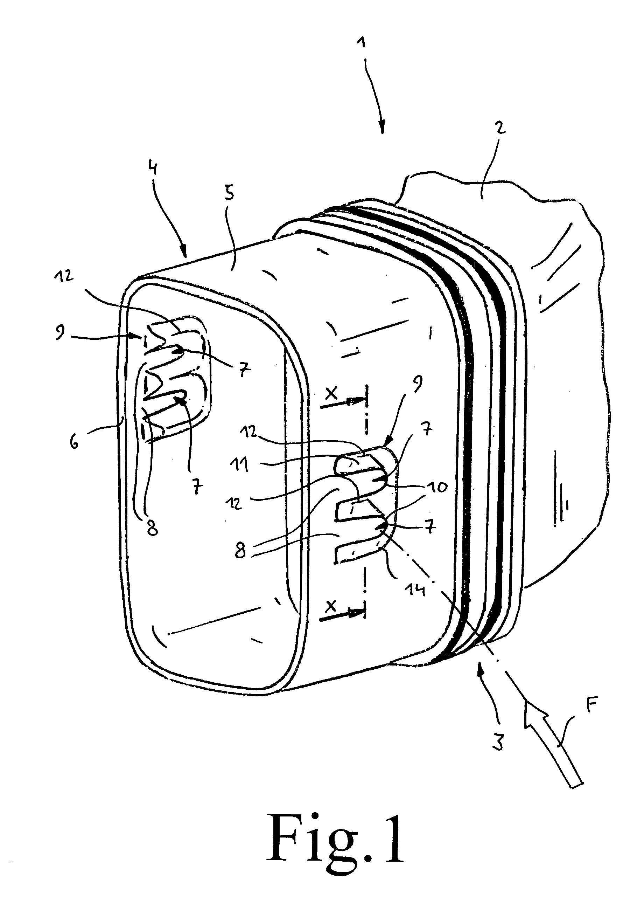

In Fig. 1 ist ein Endabschnitt einer Luftleitungseinrichtung 1 dargestellt die hier aus einem thermoplastischen Kunststoffmaterial durch einen Blas-Umformvorgang gefertigt ist. Die Luftleitungseinrichtung 1 umfasst einen Schlauchabschnitt 2, der einen im wesentlichen polygonal-rechteckförmigen Querschnitt aufweist und der über eine Faltenbalgstruktur 3 in einen Koppelungsabschnitt 4 übergeht. Der Koppelungsabschnitt 4 umfasst eine Umfangswandung 5, die sich unter einem Keilwinkel von etwa 1° zu einer vorderen Umfangsfläche 6 hin verjüngt.

Der Schlauchabschnitt 2, die Faltenbalgstruktur 3 und der Koppelungsabschnitt 4 sind einstückig durch Blas-Umformen eines thermoplastischen Schlauchmateriales ausgebildet. Im Bereich des Koppelungsabschnitts 4 sind in der Umfangswandung 5 mehrere Rastvorsprünge 7 ausgebildet. Jeder der Rastvorsprünge 7 erhebt sich in unbelastetem Zustand keilartig von einem Wurzelbereich 8 ausgehend über durch die benachbarte Umfangswandung 5 definierte Fläche des Koppelungsabschnitts 4. Die Rastvorsprünge 7 sind von einer Falte 9 umsäumt. Die Rastvorsprünge 7 gehen im Wurzelbereich 8 in die Umfangswandung 5 über. Die Rastvorsprünge 7 sind zungenartig ausgebildet und bilden auf ihrer dem Wurzelbereich 8 abgewandten Seite jeweils eine Eingriffszone 10, in deren Bereich der Rastvorsprung 7 mit einer an dem Gegenstück komplementär ausgebildeten Gegenstruktur in Eingriff tritt.

Die Falte 9 weist eine erste Faltenwandung 11 auf, die sich an den Rastvorsprung 7 anschließt und von diesem in eine in der Falte 9 gebildete Furchenzone 12 hinein abfällt. An diese Furchenzone 12 schließt sich eine zweite Faltenwandung 13 an, die über eine Aussenkante 14 an die Umfangswandung 5 angrenzt.

Durch Ausüben einer Druckkraft F auf den Rastvorsprung 7 ist es möglich, diesen derart unter die durch die Umfangswandung 5 definierte Aussenfläche abzusenken, dass dieser aus einer seitens des Gegenstückes (hier nicht dargestellt) ausgebildeten Raststruktur freikommt.

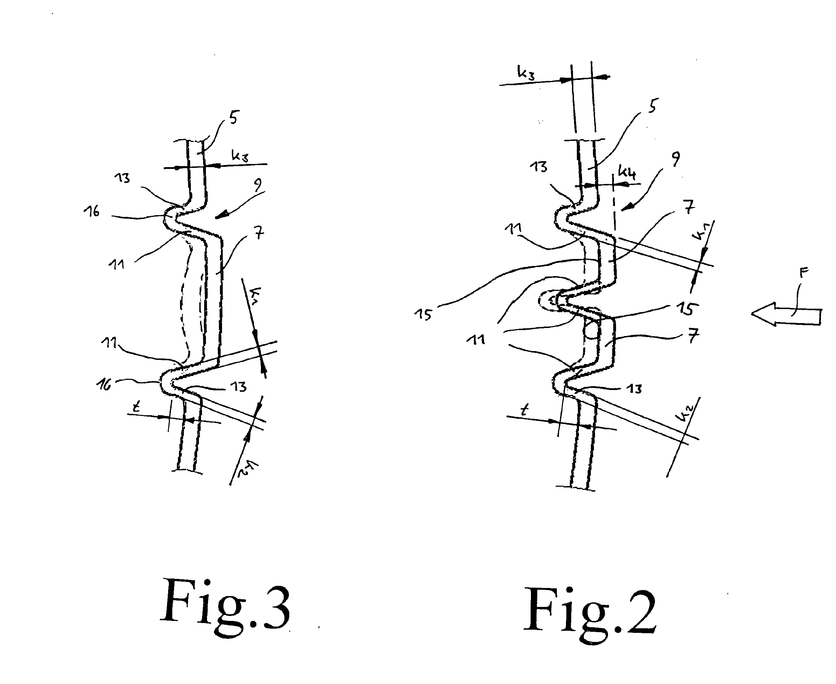

In Fig. 2 ist als Schnitt entlang der Linie X - X (Fig.1) der Querschnitt der Rastvorsprünge dargestellt. Die Rastvorsprünge 7 sind jeweils von der Falte 9 umgeben. Die Falte 9 umfasst die dem Rastvorsprung 7 benachbarte erste Faltenwandung 11 sowie die der Umfangswandung 5 benachbarte zweite Faltenwandung 13. Die beiden Faltenwandungen 11, 13 sind derart ausgebildet, dass sich für diese geringere Wandstärken k1, k2 ergeben als für die Umfangswandung 5 (Wandstärke k3). Bei dem hier dargestellten Ausführungsbeispiel beträgt die Wandstärke k3 ca. 2,8mm, wogegen die Wandstärken k1, k2 lediglich 1,2mm betragen. Die Rastvorsprünge 7 weisen im wesentlichen die gleiche Wandstärke auf wie die Umfangswandung 5. Die Rastvorsprünge 7 erheben sich um ein Maß k4 über die Umfangswandung 5, das im wesentlichen der Wanddicke der Umfangswandung 5 selbst entspricht. Die Innenfläche 15 der Rastvorsprünge 7 fluchtet dabei mit der Aussenfläche der Umfangswandung 5.

Bei dem hier dargestellten Ausführungsbeispiel sind zwei Rastvorsprünge 7 einander benachbart angeordnet und lediglich durch eine einzige Falte 9 voneinander getrennt. Durch Aufbringung der Druckkraft F auf die Rastvorsprünge 7 wird die Rastverbindungsstruktur derart deformiert, dass die Rastvorsprünge 7 wie durch die Strichlinien angedeutet unter die Aussenfläche der Umfangswandung 5 abtauchen.

Aufgrund der durch die Faltenwandungen 11, 13 gebildeten Verformungszone der Rastverbindungsstruktur ergeben sich hierbei keine unzulässig hohen Materialbelastungen.

In Fig. 3 ist eine weitere Ausführungsform der erfindungsgemäßen Rastverbindungsstruktur dargestellt, bei welcher abweichend von den vorangehend beschriebenen Ausführungsbeispiel lediglich ein von einer u-förmig verlaufenden Falte 9 umsäumter Rastvorsprung 7 vorgesehen ist. Die Falte 9 umfasst auch bei diesem Ausführungsbeispiel eine dem Rastvorsprung 7 benachbarte erste Faltenwandung 11 und eine sich an die Umfangswandung 5 anschließende zweite Faltenwandung 13. Die beiden Faltenwandungen 11, 13 sind im Bereich einer Furchenzone 16 miteinander gekoppelt. Der Zustand dieser Rastverbindungsstruktur bei Aufbringung einer Lösekraft ist durch Strichlinien angedeutet. Die zur vollständigen Absenkung des Rastvorsprunges 7 unter die Oberfläche der Umfangswandung erforderliche Verformung wird sowohl durch elastische Verformung der ersten und zweiten Faltenwandungen 11, 13 als auch durch Verformung des Rastvorsprunges 7 selbst erreicht.

Auch bei diesem Ausführungsbeispiel sind die Faltenwandungen 11, 13 derart ausgebildet, dass deren Wandstärken k1 bzw. k2 geringer sind als die Wanddicke k3 der Umfangswandung 5.

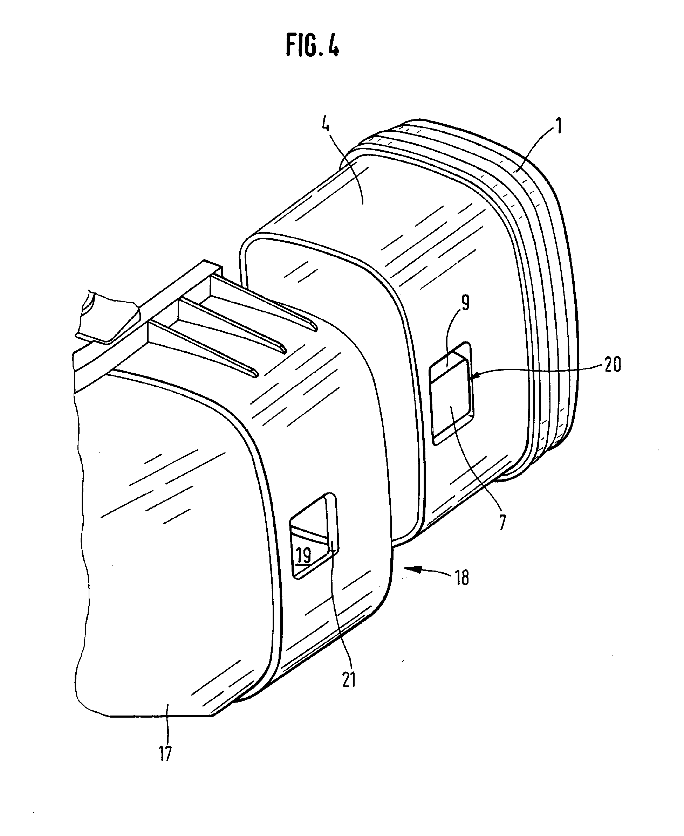

In Fig. 4 ist eine Luftleitungseinrichtung 1 sowie ein mit dieser koppelbares Gegenstück 17 dargestellt. Das Gegenstück 17 bildet Teil eines Luftfilterkastens und umfasst eine Aufnahmeöffnung 18, in die der Koppelungsabschnitt 4 der Leitungseinrichtung 1 einsteckbar ist. In dem Gegenstück 17 ist eine Rastöffnung 19 ausgebildet, in welche der im Bereich des Koppelungsabschnitts 4 vorgesehene Rastvorsprung 7 federelastisch eingreifen kann. Der Rastvorsprung 7 bildet eine Stirnfläche 20 die mit einer in der Rastöffnung 19 ausgebildeten Rastfläche 21 in Eingriff bringbar ist. Die Rastöffnung 19 ist derart bemessen, dass diese den Rastvorsprung 7 aufnimmt, ohne dass hierbei die Falte 9 zur Umgebung hin freiliegt. Zur Koppelung des Koppelungsabschnitts 4 mit dem Gegenstück 17 wird der Koppelungsabschnitt 4 lediglich in die Aufnahmeöffnung 18 des Gegenstückes eingesteckt bis der Rastvorsprung 7, insbesondere dessen Stirnfläche 20 mit der Rastfläche 21 der Rastöffnung 19 in Eingriff tritt. Der Koppelungsabschnitt 4 ist in dieser Stellung zuverlässig in dem Gegenstück 17 verankert. Zur Entfernung der Luftführungseinrichtung 1 von dem Gegenstück 17 ist es möglich, den großflächig über die Rastöffnung 19 frei liegenden Rastvorsprung 7 manuell nach innen zu drängen, bis dessen Stirnfläche 20 unter die Innenfläche der Aufnahmeöffnung 18 hinein abfällt. In diesem Zustand ist es möglich, den Koppelungsabschnitt 4 aus der Aufnahmeöffnung 18 heraus zu ziehen.

Durch die Ausbildung der erfindungsgemäß vorgeschlagenen umlaufenden Falte 9 um den durch den Rastvorsprung 7 gebildeten Schnappbereich wird eine verbesserte Verformungscharakteristik der Rastverbindungsstruktur erreicht, wodurch es auf vorteilhafte Weise möglich wird, die Verriegelungseigenschaften der Raststruktur derart abzustimmen, dass die Rastvorsprünge bei Überschreiten einer vorgegebenen Zugkraft selbsttätig in eine Lösestellung treten, ohne dass hierbei die Gefahr besteht, dass die Rastvorsprünge 7 abgeschert werden und hierbei eine unzulässige Beschädigung der Leitungseinrichtung erfolgt.

Da die erfindungsgemäße Rastverbindungsstruktur manuell unter Aufbringung lediglich von Handkräften in eine Freigabestellung bringbar ist, eignet sich diese insbesondere auch für die Schaffung lösbarer Verbindungen in schwer zugänglichen Bereichen.

## Patentansprüche

1. Rastverbindungsstruktur mit einem zur Ankoppelung an ein Gegenstück (17) vorgesehenen Koppelungsabschnitt (4),der eine Umfangswandung (5) und einen mit dieser integral ausgebildeten Rastvorsprung (7) aufweist, der in eine Verriegelunsposition bringbar ist und den Koppelungsabschnitt (4) und das Gegenstück in einer Fügestellung fixiert, wobei der Rastvorsprung (7) eine Eingriffszone aufweist und in einem an die Eingriffszone angrenzenden Bereich in der Umfangswandung (5) wenigstens eine Falte (9) ausgebildet ist.

2. Rastverbindungsstruktur nach Anspruch 1 **dadurch gekennzeichnet, dass** die Eingriffszone sich von einem Wurzelabschnitt (8) ausgehend zungenartig aus der Umfangswandung (5) erhebt.

3. Rastverbindungsstruktur nach Anspruch 1 oder 2, **dadurch gekennzeichnet, dass** die Falte (9) einen u-förmigen Verlauf aufweist und den Rastvorsprung (7) zumindest im Bereich der Eingriffszone umsäumt.

4. Rastverbindungsstruktur nach wenigstens einem der Ansprüche 1 bis 3, **dadurch gekennzeichnet, dass** der Koppelungsabschnitt (4) mehrere Rastvorsprünge (7) aufweist.

5. Rastverbindungsstruktur nach Anspruch 4, **dadurch gekennzeichnet, dass** mehrere Rastvorsprünge (7) zueinander benachbart angeordnet.

6. Rastverbindungsstruktur nach wenigstens einem der Ansprüche 1 bis 5, **dadurch gekennzeichnet, dass** die Falte (9) eine erste Faltenwandung (11) aufweist, die sich an den Rastvorsprung (7) anschließt und von diesem ausgehend sich zu einer Furchenzone (16) hin erstreckt, und dass sich an die Furchenzone (16) eine zweite Faltenwandung (13) anschließt die in die Umfangswandung (5) übergeht.

7. Rastverbindungsstruktur nach Anspruch 6, **dadurch gekennzeichnet, dass** die Wanddicken (k1, k2) der ersten und/oder der zweiten Faltenwandung (12, 13) dünner sind als die Wanddicke (k3) der angrenzenden Umfangswandung (5).

8. Rastverbindungsstruktur nach Anspruch 6 oder 7, **dadurch gekennzeichnet, dass** eine in der Furchenzone (16) gebildete Falteninnenkante um eine Tiefziehstrecke (t) unter eine Innenfläche der Umfangswandung (5) zurückfällt, die größer ist als die Wanddicke (k1, k2) der ersten oder der zweiten Faltenwand (11, 13).

9. Rastverbindungsstruktur nach wenigstens einem der Ansprüche 1 bis 8, **dadurch gekennzeichnet, dass** die Falte (9) derart ausgebildet ist, dass die erste Faltenwand (11) und die zweite Faltenwand (13) zueinander unter einem Winkel im Bereich von 15 bis 70° geneigt ausgerichtet sind.

10. Rastverbindungsstruktur nach wenigstens einem der Ansprüche 1 bis 9, **dadurch gekennzeichnet, dass** der Rastvorsprung (7) eine in Auszugsrichtung weisende Stirnfläche (20) aufweist, und dass die Stirnfläche (20) gegenüber einer Auszugs-Bahngeraden derart geneigt ist, dass bei Überschreiten einer vorgegebenen Lösekraft der Rastvorsprung (7) in eine Freigabestellung abtaucht.

11. Rastverbindungsstruktur nach wenigstens einem der Ansprüche 1 bis 10, **dadurch gekennzeichnet, dass** diese Teil eines Blas-Formteiles bildet.

12. Leitungseinrichtung mit einem zur Ankoppelung an ein Gegenstück (17) vorgesehenen Koppelungsabschnitt (4), wobei seitens des Gegenstückes (17) eine Eingriffsausnehmung (19) und seitens des Koppelungsabschnittes (4) eine Umfangswandung (5) und ein hiermit integral ausgebildeter Rastvorsprung (7) vorgesehen ist, wobei der Rastvorsprung (7) eine im Zusammenspiel mit dem Gegenstück (17) in Verriegelungsstellung bringbare Eingriffszone aufweist, und in einem an die Eingriffszone angrenzenden Bereich in der Umfangswandung (5) eine Falte (9) ausgebildet ist.
